# EUROPÄISCHE PATENTSCHRIFT

(11) **EP 0 407 954 B1**
(45) Veröffentlichungstag und Bekanntmachung des Hinweises auf die Patenterteilung: **22.09.1993**
(21) Anmeldenummer: 90113129.2
(22) Anmeldetag: 10.07.1990
(51) Int. Cl.: A47J 37/04

(54) **Grillvorrichtung**
Grilling device
Appareil de grillage

(30) Priorität: 12.07.1989 DE 3923015
(43) Veröffentlichungstag der Anmeldung: 16.01.1991
(73) Patentinhaber: OTTILIA HERTEL KG, 95126 Schwarzenbach a.d. Saale (DE)
(72) Erfinder: Hertel, Max, D-8676 Schwarzenbach/Saale Martinlamitz (DE)
(74) Vertreter: Reinhard - Skuhra - Weise & Partner

(56) Entgegenhaltungen:
- AU-A- 526 558
- DE-U- 8 532 388
- DE-U- 8 904 448
- FR-A- 1 201 454
- GB-A- 394 356
- GB-A- 933 813

## Beschreibung

Die Erfindung betrifft eine Grillvorrichtung gemäß dem Oberbegriff des Patentanspruchs 1.

Die Erfindung bezieht sich insbesondere auf eine Grillvorrichtung, die zur Montage auf einem Fahrzeugaufbau konzipiert ist, wobei der Fahrzeugaufbau üblicherweise mehrere derartiger Grillvorrichtungen nebeneinander enthält.

Derartige Grillvorrichtungen werden üblicherweise auf einem Fahrzeugaufbau so montiert, daß sie von einer Fahrzeugseite her zugänglich sind, während im Inneren des Fahrzeugaufbaus Gasbehälter usw. zur Beheizung der Heizkörper montiert sind.

Eine Grillvorrichtung der eingangs genannten Art ist aus dem DE-GM 85 32 388 bekannt. Diese bekannte Grillvorrichtung ermöglicht den Einsatz von in zwei vertikalen, zueinander parallelen Reihen zu lagernden Grillspießen, wobei die Grillspieße der ersten Reihe gegenüber den Grillspießen der zweiten Reihe vertikalversetzt vorgesehen sind. Die Heizkörper sind bei einer solchen Grillvorrichtung in Höhe der und direkt benachbart zu den Grilllspießen einer ersten vertikalen Reihe vorgesehen, um die von den Heizkörpern erzeugte Energie im Bereich der Lücken zwischen den Grillspießen der ersten Reihe auszunützen. Bei einer solchen Grillvorrichtung sind die übereinanderliegend angeordneten und die Heizkörper tragenden Heizkörperhalterungen durch Platten fest miteinander verbunden oder an Montageplatten befestigt, die relativ hohes Gewicht haben und zugleich als Reflektoren dienen. Die Heizkörper selbst haben eine vergleichbar große Wärmeabstrahlfläche und bestehen beispielsweise aus Keramikplatten, welchen auf ihrer Rückseite Gas zugeführt wird, so daß auf der Vorderseite in Richtung auf die Grillspieße eine Hitzeabstrahlung erfolgt.

Nachteilig bei derartigen Grillvorrichtungen ist, daß durch die vergleichbar starken und schweren, als Reflektoren wirkenden Montageplatten die Grillvorrichtung ein verhältnismäßig hohes Gewicht erhält. Die Wärmeverteilung im Bereich der direkt zu den Heizkörpern benachbart liegenden Grillspieße ist verhältnismäßig stark, während in dem Bereich der Anordnung der Reflektorplatten eine vergleichbar schlechte Wärmeabstrahlung vorliegt. Demgemäß ist es erforderlich, die von den Heizkörperflächen weiter entfernt in der zweiten Reihe liegend angeordneten Grillspieße in die erste Reihe umzuhängen, und umgekehrt, um das zu grillende Gut einer gleichmäßigen Wärmeeinwirkung auszusetzen.

Der Erfindung liegt die Aufgabe zugrunde, eine Grillvorrichtung der eingangs genannten Art derart zu verbessern, daß eine gleichmäßige Wärmeverteilung gegenüber den Grillspießen in der ersten und zweiten Reihe erreicht wird und eine einfache, optimierte Regelbarkeit der Temperatur möglich ist.

Diese Aufgabe wird erfindungsgemäß durch die Merkmale des Patentanspruchs 1 gelöst.

Weitere Ausgestaltungen der Erfindung ergeben sich aus den Unteransprüchen.

Mit der erfindungsgemäßen Grillvorrichtung ist durch die Anordnung von zusätzlichen Heizkörpern bzw. Brennern zwischen den üblicherweise vorhandenen Heizkörpern ein Umhängen der Spieße praktisch unnötig. Gleichzeitig wird durch den Entfall der Reflektorplatten, die durch die zusätzlichen Heizkörper ersetzt werden, das Gesamtgewicht jeder Grillvorrichtung erheblich reduziert, dadurch daß die einzelnen vertikal zueinander benachbarten Heizkörperhalterungen durch Klemmhalterungen miteinander verbunden sind.

Ein weiterer Vorteil ist darin zu sehen, daß durch den Wegfall der vergleichbar großflächigen Reflektorplatten und deren Ersatz durch zusätzliche Heizkörper bzw. durch die Anordnung der Klemmhalterungen die bisher aufgetretenen Dehnungsprobleme beseitigt sind.

Durch den Einsatz der zusätzlichen Heizkörper ist es möglich, die Heizfläche jedes Heizkörpers kleiner, insbesondere schmäler gegenüber den bekannten Grillvorrichtungen zu dimensionieren, was zu einer gleichmäßigen Wärmeabstrahlung beiträgt.

Im folgenden wird eine bevorzugte Ausführungsform der Grillvorrichtung anhand der Zeichnung zur Erläuterung weiterer Merkmale beschrieben. Es zeigen:
- Fig. 1: eine Vorderansicht einer Grillvorrichtung mit teilweise weggeschnittenem, in Vertikalrichtung verschwenkbarem Abschlußdeckel,
- Fig. 2: eine Seitenansicht der Grillvorrichtung nach Fig. 2,
- Fig. 3: eine schematische Teildarstellung zur Erläuterung der Heizkörperhalterung und der die einzelnen Heizkörperhalterungen miteinander verbindenden Klemmhalterungen, und
- Fig. 4: eine Draufsicht auf eine Grillvorrichtung.

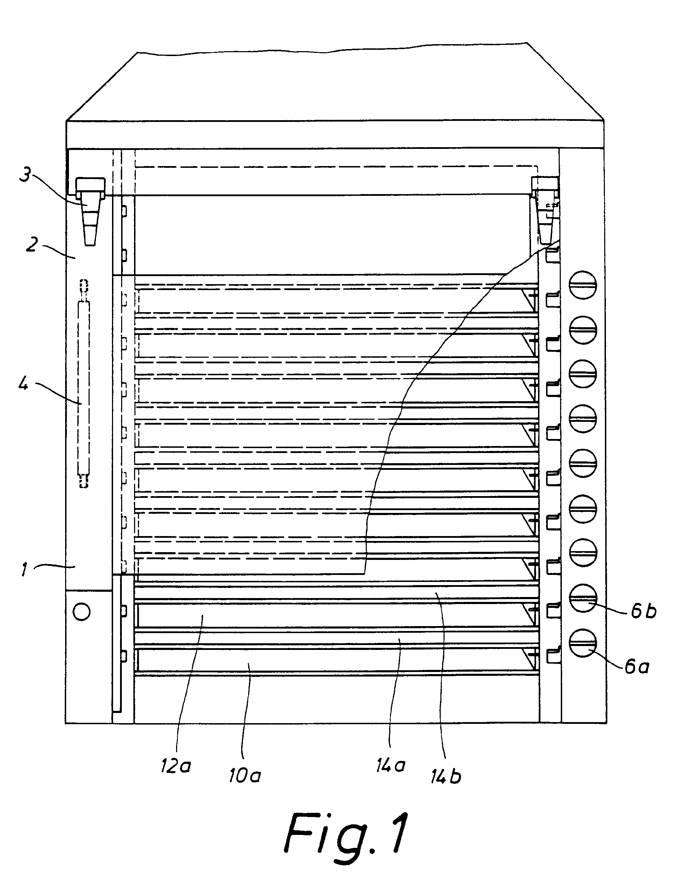

Im folgenden wird unter Bezugnahme auf die Zeichnung eine bevorzugte Ausführungsform der Grillvorrichtung beschrieben. Fig. 1 zeigt eine Grillvorrichtung der erfindungsgemäßen Art, die seitlich an einem Fahrzeug, beispielsweise einem Klein-LKW montiert wird. Üblicherweise werden mehrere derartige Grillvorrichtungen nebeneinanderstehend als Fahrzeugaufbau vorgesehen, derart, daß die Grillvorrichtungen von der Fahrzeugseite her nach Hochschwenken einer Klappe oder dergleichen, zugänglich sind. Jede derartige Grillvorrichtung weist einen in Vertikalrichtung hochschwenkbaren Deckel 1 auf, der an einem Seitenrahmenteil 2 durch Scharniere 3 befestigt ist und in der hochgeklappten Stellung durch ein Gasfederpaar 4 oder dergleichen hochgehalten wird. Für jeden der noch näher zu beschreibenden Heizkörper ist vorzugsweise ein eigenes Schaltventil 6a, 6b usw. vorgesehen, wodurch die einzelnen Heizkörper getrennt regelbar sind.

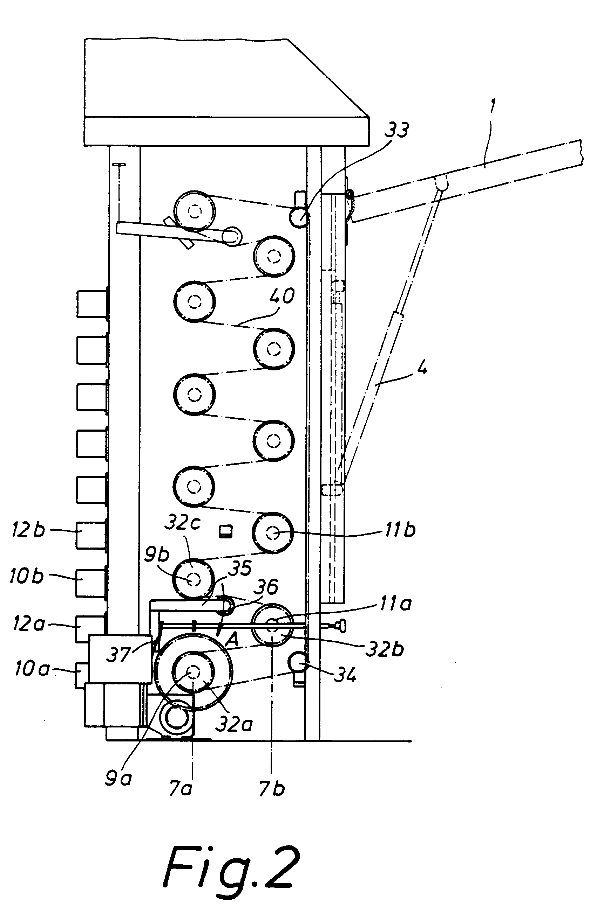

Wie aus der Darstellung nach Fig. 2 ersichtlich ist, sind die einzelnen Grillspieße in zwei im wesentlichen zueinander parallelen Reihen 7a, 7b vorgesehen. Aus Fig. 1 und 2 ist ersichtlich, daß in bekannter Weise jedem der in der ersten Reihe 7a liegenden und gestrichelt angedeuteten Grillspieße 9a,9b ein länglicher und in Horizontalrichtung verlaufender Heizkörper 10a, 10b usw. zugeordnet ist. In der zweiten Reihe 7b sind in bekannter Weise zu den Grillspießen 9a, 9b versetzt angeordnete Lagerungen bzw. Antriebe für die zweiten Grillspieße 11a, 11b usw. vorgesehen, derart, daß sie in den durch die Grillspieße 9a, 9b usw. definierten horizontalen Lücken und gegenüber den Heizkörpern 10a, 10b weiter entfernt versetzter Anordnung vorgesehen sind. Gemäß der Erfindung ist zusätzlich zu jedem Heizkörper 10a, 10b ein Heizkörper 12a, 12b usw. vorgesehen und zwar jeweils in Höhe eines Grillspießes 11a, 11b usw. der zweiten Reihe. Diese zusätzlichen Heizkörper 12a, 12b bewirken eine Wärmeabstrahlung nicht nur in Richtung auf die in horizontaler Richtung weiter entfernt liegenden Grillspieße 11a, 11b usw., sondern gewährleisten auch eine seitliche Abstrahlung in Richtung auf die Grillspieße 9a, 9b der ersten Reihe. Über die gesamte zweireihige Anordnung von Grillspießen 9a, 9b usw., 11a, 11b usw. ist damit eine gleichmäßige Hitzeabgabe erreichbar bei gleichzeitiger, gegenüber der bekannten Grillvorrichtung in Vertikalrichtung reduzierbarer Heizkörperdimensionierung. Unter Reduzierung der Heizkörperfläche wird dabei insbesondere eine Verringerung der Heizkörperhöhe in vertikaler Richtung gegenüber der bekannten Grillvorrichtung verstanden.

Erfindungsgemäß ist es damit möglich, bei bereits gegartem Grillgut die erste Reihe von Heizkörpern 10a, 10b usw. hinsichtlich ihrer Heizleistung wesentlich zu reduzieren oder abzuschalten und nur noch die Heizkörper 12a, 12b in der zweiten Reihe mit voller oder reduzierter Heizleistung zu fahren unter Gewährleistung einer entsprechenden Wärmebeaufschlagung des Grillgutes bei sich drehenden Grillspießen.

Aus der Ansicht von Fig. 1 geht hervor, daß die erfindungsgemäße Grillvorrichtung eine Vielzahl von vergleichbar schmalen Heizkörpern 10a, 10b usw., 12a, 12b aufweist, wobei die Heizkörper von unten nach oben in der Reihenfolge 10a, 12a, 10b, 12b usw. vorgesehen sind. Die Heizkörper mit den Bezugszeichen 10 sind der vorderen Reihe 7a von Grillspießen und die Heizkörper mit den Bezugszeichen 12 der hinteren Reihe 7b mit Grillspießen zugeordnet.

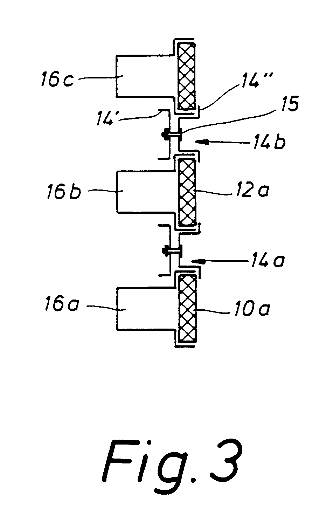

Die Heizkörper 10a usw., 12a usw., die eine verhältnismäßig kleine Höhe haben, stehen miteinander über Klemmhalterungen, vorzugsweise in Form von Klemmschienen 14a, 14b usw. in Verbindung. Die Klemmhalterungen 14a, 14b usw. sind in Fig. 3 in Seitenschnittansicht dargestellt und bestehen jeweils aus zwei rostfreien Metallteilen, beispielsweise aus V2A-Stahl, von denen der rückwärtige Teil etwa U-Profil 14' aufweist, während der nach vorne weisende Teil 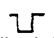 -Profil 14'' hat. Beide Teile 14', 14'' werden durch Schrauben 15 oder dergleichen zusammengehalten, die ein Verspannen der beiden Teile 14', 14'' unter Erfassung der in Vertikalrichtung liegenden Heizkörperhalterungen 16a, 16b bzw. 16b, 16c usw. bewirken. Die Heizkörperhalterungen 14a usw. sind profiliert und haben etwa trichterförmige Gestalt. Sie bestehen aus rostfreiem Stahl und weisen das in Fig. 3 gezeigte Profil mit einem vorderen, jeweils einen Heizkörper 10a, 12a usw. aufnehmenden Abschnitt auf.

Gemäß Fig. 1 haben die Klemmhalterungen 14a, 14b usw. eine längliche Gestalt und erstrecken sich über die Gesamtbreite zwischen den beiden Seitenrahmen 2. Die Klemmhalterungen 16a, 16b dienen einer vertikalen Fixierung der übereinanderliegenden Heizkörperhalterungen, wobei die Klemmhalterungsteile 14'' zugleich als Reflektoren fungieren. Zur Befestigung der Heizkörperhalterungen 16a, 16b usw. ist jede Heizkörperhalterung mit einer seitlich abstrebenden Lasche 20 versehen, die vorzugsweise an einem durch ein Stahlblech oder dergleichen gebildeten Profil 22 jedes Seitenrahmens 2 angeschraubt oder auf andere Weise befestigbar ist. Auf diese Weise ermöglicht die erfindungsgemäße Grillvorrichtung auch das Austauschen einzelner Heizkörper bzw. Heizkörperhalterungen durch einfaches Lösen der zugehörigen Klemmhalterungen, ohne daß eine gesamte Demontage im Bereich der Heizkörper vorgenommen werden muß. Zu diesem Zweck sind die Schraubmittel der Klemmhalterungen 14a, 14b usw. vorzugsweise von der Rückseite der Heizkörperhalterungen 16a usw. zugänglich, d.h. von der Rückseite der in Fig. 1 gezeigten Grillvorrichtung.

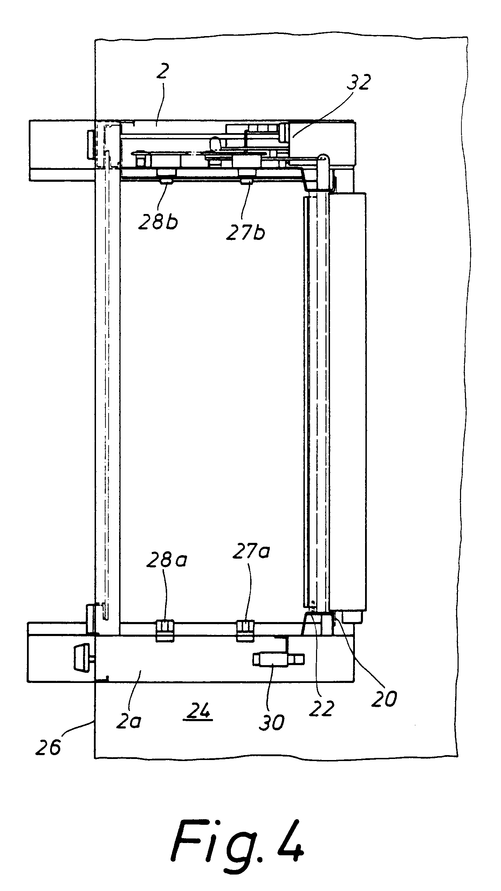

Fig. 4 ist eine Draufsicht einer erfindungsgemäßen Grillvorrichtung. Ein Teil der unterhalb der Grillvorrichtung befindlichen Stellfläche 24 des zugehörigen Fahrzeugs ist in Fig. 4 veranschaulicht. Die Ebene mit den Heizkörpern 10a, 12a usw. ist zur Seitenkante 26 des Fahrzeugaufbaus in Richtung Mitte des Fahrzeugaufbaus versetzt angeordnet. Ferner zeigt Fig. 4 die Lagerungen der ersten Reihe 7a der Grillspieße, die mit 27a, 27b bezeichnet sind, sowie entsprechend eine der Lagerungen 28a, 28b für die zweite Reihe 7b der Grillspieße. Mit 30 ist die Gasversorgung angedeutet, die in dem in Fig. 1 gezeigten rechten Seitenteil untergebracht ist, während mit 32 der in dem in Fig. 1 linken Seitenteil befindliche Antrieb bezeichnet ist.

Entsprechend Fig. 4 wird gesamte Aufbau der beschriebenen Grillvorrichtung im wesentlichen durch die beiden Seitenteile 2, 2a und durch die Heizkörper 10a, 12a usw. gebildet, wobei die Heizkörperhalterungen 16a, 16b usw. die beiden Seitenteile 2, 2a in der vorstehend beschriebnenen Weise mittels der Laschen 20 miteinander verbinden. Die bisher übliche Montageplatte zur Befestigung der einzelnen Heizkörper entfällt erfindungsgemäß und trägt damit zusätzlich zu einer Gewichtsersparnis der gesamten Grillvorrichtung bei.

In Verbindung mit Fig. 2 ist auch der Antrieb der Grillvorrichtung gezeigt. Für jeden Grillspieß ist ein Kettenrad 32a, 32b, 32c usw. vorgesehen. Eine Kette 40 verläuft in der aus Fig. 2 ersichtlichen Weise über die zueinander versetzten Kettenräder 32a, 32b, 32c usw., bis sie an der Oberseite über ein Umlenkrad 33 nach unten zu einem weiteren Umlenkrad 34 und dann zum Kettenrad 32a zurückgeführt ist. Dieser Antrieb ist mit einer automatischen Motorabschalteinrichtung versehen, die auf die Kettenspannung anspricht. Falls ein Grillspieß klemmt, erhöht sich die Kettenspannung und drückt einen Sensor 35, der ein Kettenrad 36 hält, in Richtung des in Fig. 2 gezeigten Pfeils A, um einen Drehpunkt des durch einen Hebelarm gebildeten Sensors 35, wodurch ein mit 37 bezeichneter Motorendabschalter aktiviert wird und den Antrieb zum Stillstand bringt. Zur Betätigung des Sensors 35 liegt das Kettenrad 36 unter Vorspannung an der Kette 40 an, so daß die Kette geringfügig aus ihrer geradlinigen Verbindungslinie zwischen den Kettenrädern 32b, 32c heraus verlagerbar ist. Auf diese Weise ist eine Betätigung des Sensors 35 im Falle eines Blockierens eines der Kettenräder sichergestellt.

## Patentansprüche

1. Grillvorrichtung, insbesondere für einen Fahrzeugaufbau, mit in einer ersten Reihe (7a) vorgesehenen, ortsfesten und drehbaren ersten Spießen (9a, 9b, 9c usw), mit hinter den ersten Spießen (9a, 9b usw.) angeordneten Hiezkörpern (10a, 10b usw.),
mit in einer zweiten Reihe (7b) vorgesehenen, ortsfesten und drehbaren zweiten Spießen (11a, 11b usw.), die in Vertikalrichtung zwischen den ersten Spießen (9a, 9b usw.) liegend angeordnet sind,
**dadurch gekennzeichnet,**
daß zusätzliche Heizkörper (12a, 12b, 12c usw.) vorgesehen sind, die zwischen jeweils einem der Heizkörper (10a, 10b usw.) montiert sind, welche den ersten Spießen (9a, 9b usw.) zugeordnet sind.

2. Grillvorrichtung nach Anspruch 1, dadurch gekennzeichnet, daß die zusätzlichen Heizkörper (12a, 12b usw.) jeweils horizontal gegenüber den in der zweiten Reihe angeordneten Grillspießen (11a, 11b usw.) ausgerichtet sind.

3. Grillvorrichtung nach Anspruch 1, wobei jeder Heizkörper in einer Heizkörperhalterung (16a, 16b usw.) gelagert ist, dadurch gekennzeichnet, daß die übereinanderliegend angeordneten Heizkörperhalterungen (16a, 16b usw.) durch Klemmhalterungen (14a, 14b) gegeneinander fixiert sind.

4. Grillvorrichtung nach Anspruch 3, dadurch gekennzeichnet, daß jede Klemmhalterung (14a, 14b usw.) aus zwei durch Schraubmittel (15) oder dergleichen gegeneinander verspannbaren, leistenförmigen Teilen (14', 14'') besteht.

5. Grillvorrichtung nach Anspruch 4, dadurch gekennzeichnet, daß die leistenförmigen Teile (14', 14'') profiliert sind.

6. Grillvorrichtung nach einem der vorangehenden Ansprüche, dadurch gekennzeichnet, daß jede Heizkörperhalterung (16a, 16b usw.) seitlich abstrebende Laschen (20) zur Befestigung an einem Seitenrahmen (2, 2a) aufweist.

7. Grillvorrichtung nach Anspruch 1 mit einem Kettenantrieb für die Grillspieße,
dadurch gekennzeichnet, daß ein auf die Kettenspannung ansprechender Sensor (325, 36) vorgesehen ist, der bei Aktivierung einen Motor-Endabschalter (37) betätigt.

## Claims

1. Grill, in particular for a motor vehicle body, having stationary and rotatable first spits (9a, 9b, 9c etc.) disposed in a first row (7a),
having heating elements (10a, 10b etc.) disposed behind the first spits (9a, 9b etc.),
having stationary and rotatable second spits (11a, 11b etc.) provided in a second row (7b) and disposed in a vertical direction horizontally between the first spits (9a, 9b etc.),
characterized in that
additional heating elements (12a, 12b, 12c etc.) are provided, which are mounted in each case between one of the heating elements (10a, 10b etc.) which are associated with the first spits (9a, 9b etc.).

2. Grill according to claim 1, characterized in that the additional heating elements (12a, 12b etc.) are in each case aligned horizontally opposite the grill spits (11a, 11b etc.) disposed in the second row.

3. Grill according to claim 1, wherein each heating element is supported in a heating element holding device (16a, 16b etc.), characterized in that the heating element holding devices (16a, 16b etc.) disposed one above the other are fixed against one another by means of clamping holding devices (14a, 14b).

4. Grill according to claim 3, characterized in that each clamping holding device (14a, 14b etc.) comprises two strip-like parts (14', 14'') which may be braced against one another by screw means (15) or the like.

5. Grill according to claim 4, characterized in that the strip-like parts (14', 14'') are contoured.

6. Grill according to one of the preceding claims, characterized in that each heating element holding device (16a, 16b etc.) has laterally bracing brackets (20) for fastening to a side frame (2, 2a).

7. Grill according to claim 1, having a chain drive for the grill spits, characterized in that a sensor (325, 36) is provided, which responds to the chain tension and, on activation, operates a motor limit switch (37).

## Revendications

1. Gril, destiné notamment à être monté sur une carrosserie de véhicule, comprenant des premières broches (9a, 9b, 9c, etc.), qui sont agencées de façon à pouvoir tourner en un emplacement fixe et disposées suivant une première rangée (7a), des corps de chauffe (10a, 10b, etc.), disposés derrière les premières broches (9a, 9b, etc.), et des secondes broches (11a, 11b, etc.), agencées de façon à pouvoir tourner en un emplacement fixe, qui sont disposées suivant une seconde rangée (7b) et sont situées, en direction verticale, entre les premières broches (9a, 9b, etc.), caractérisé en ce qu'il est prévu des corps de chauffe supplémentaires (12a, 12b, 12c, etc.) montés respectivement entre les corps de chauffe (10a, 10b, etc.) qui sont associés aux premières broches (9a, 9b, etc.).

2. Gril suivant la revendication 1, caractérisé en ce que les corps de chauffe (12a, 12b, etc.) supplémentaires sont situés respectivement au même niveau horizontal que les différentes broches de gril (11 a, 11 b, etc.) de la seconde rangée.

3. Gril suivant la revendication 1, dans lequel chaque corps de chauffe est monté dans un porte-corps de chauffe (16a, 16b, etc.), caractérisé en ce que les porte-corps de chauffe (16a, 16b, etc.) disposés l'un au-dessus de l'autre sont fixés entre eux au moyen de supports de serrage (14a, 14b).

4. Gril suivant la revendication 3, caractérisé en ce que chaque support de serrage (14a, 14b, etc.) est constitué de deux parties (14', 14'') en forme de baguettes qui sont serrées entre elles à l'aide de moyens de vissage (15) ou de moyens analogues.

5. Gril suivant la revendication 4, caractérisé en ce que les parties (14', 14'') en forme de baguettes sont constituées de profilés.

6. Gril suivant l'une des revendications précédentes, caractérisé en ce que chaque porte-corps de chauffe (16a, 16b, etc.) comporte des pattes (20) s'étendant latéralement et servant à la fixation sur un châssis latéral (2, 2a).

7. Gril suivant la revendication 1, comprenant un entraînement par chaîne pour les broches de gril, caractérisé en ce qu'il est prévu un capteur (35, 36) qui réagit à la tension de la chaîne et qui, lorsqu'il est activé, actionne un interrupteur de fin de course (37) associé à un moteur.
